(19)

Europäisches
Patentamt
European
Patent Office
Office européen
des brevets

(11) **EP 2 932 490 B1**

(12) **EUROPEAN PATENT SPECIFICATION**

(45) Date of publication and mention
of the grant of the patent:
**22.02.2017 Bulletin 2017/08**

(21) Application number: **13821788.0**

(22) Date of filing: **11.12.2013**

(51) Int Cl.:
*G08G 1/015* (2006.01)     *G08G 1/02* (2006.01)
*G08G 1/052* (2006.01)     *B61L 1/06* (2006.01)
*B61L 1/16* (2006.01)     *G01G 19/02* (2006.01)
*G01L 1/22* (2006.01)

(86) International application number:
**PCT/AT2013/050243**

(87) International publication number:
**WO 2014/089591 (19.06.2014 Gazette 2014/25)**

(54) **METHOD FOR MEASURING A MOVING VEHICLE**

VERFAHREN ZUR MESSUNG EINES SICH BEWEGENDEN FAHRZEUGS

PROCÉDÉ DE MESURE D'UN VÉHICULE MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2012  AT 505862012**

(43) Date of publication of application:
**21.10.2015  Bulletin 2015/43**

(73) Proprietor: **Universität Wien
1010 Wien (AT)**

(72) Inventors:
• **FEICHTINGER, Hans, Georg
A-2130 Mistelbach (AT)**
• **HAMPEJS, Mario
A-1190 Wien (AT)**
• **DAS, Saptarshi
HSR Layout Bangalore 560102 (IN)**

(74) Representative: **Weiser, Andreas et al
Patentanwalt
Kopfgasse 7
1130 Wien (AT)**

(56) References cited:
**EP-A1- 2 128 837     US-A- 5 111 897
US-A- 5 673 039     US-A1- 2012 160 574
US-B1- 6 556 927**

• **Michael Quilligan: "Bridge Weigh-in-Motion,
Development of a 2-D Mutli-Vehicle Algorithm", ,
1 March 2003 (2003-03-01), pages 35-72,
XP055112786, Stockholm, Sweden Retrieved
from the Internet:
URL:http://web.byv.kth.se/shared/pdf/71_Bu
lletin%2069.pdf [retrieved on 2014-04-08]**

**EP 2 932 490 B1**

**Description**

The present invention relates to a method for measuring a vehicle moving on a roadway, in particular a bridge, with the aid of at least one sensor measuring the deformation under load of the roadway.

Systems for measuring moving vehicles by measuring the deformation under load of the roadway are referred to as WIM (weigh-in-motion) systems. WIM methods can be used to determine the vehicle weights, axle loads, axle spacing, numbers of axles, etc., of the vehicles moving past.

Deformation sensors were originally used in bridge supporting structures to permit early detection of damage or signs of wear on the bridge. In Moses, F., Weigh-in-Motion System Using Instrumented Bridges, ASCE, Transportation Engineering Journal, 1979, Volume 105, No. 3, pages 233 - 249, it was proposed that such bridge sensors also be used to determine axle loads and vehicle weights, wherein the vehicle speed and axle spacing must be known in advance. According to US 5 111 897, the axle spacing and vehicle speed are determined for this purpose by means of separate sensors, which are installed before the bridge.

Žnidarič et al., Weigh-in-Motion of Axles and Vehicles for Europe (WAVE), Report of Work Package 1.2, Bridge WIM Systems, 4th Framework Program Transport, RTD-Project RO-96-SC 403, Dublin, 2001, describe a BWIM vehicle-measuring method having a complex Powell optimization algorithm, wherein a difference between calculated and measured supporting structure reactions is determined; to this end, extensive preliminary measurements must be performed for modelling, and calculation-intensive optimization steps must be performed for the vehicle measurement.

Document WO 2012/139145 A1 discloses arrangements and data network architectures for distributed bridge sensors and a central evaluation device, wherein a camera is mounted on the bridge to record the vehicles and their axles and dimensions. Document US 2012/160574 A1 discloses a vehicle passage tread sensor buried in a road.

The objective of the invention is to create a method for measuring a moving vehicle that requires no sensors other than WIM sensors and is highly accurate while remaining simple in terms of preparation and computation. The invention is applicable to in-road WIM and also to Nothing-on-the-road (NOR-)or free-of-axle (FAD-)WIM, e.g. Bridge Weigh in Motion.

This objective is achieved according to the invention by a method of the initially stated type, which is characterized by:

Recording the time curve of the sensor-measured value while the vehicle moves past the sensor;

Repeating a minimization, in which a measure of the deviation from the recorded curve by a parametrized reference function comprising a sum of a number of rational functions is minimized by adapting the parameters thereof, wherein a different number is used in every repetition and, in fact, as often as necessary until the deviation measure falls below a limit value, and then selecting the reference function associated with this deviation measure as the selected reference function; and

Determining the number of rational functions of the selected reference function as the number of axles of the vehicle.

By means of the aforementioned rational functions, the deformation under load of the roadway can be simulated very easily by adapting a few parameters. Any curves of the sensor-measured value that occur in reality can be approximated by superposing two or more such rational functions to form one parametrized reference function. Given that different reference functions are minimized in terms of the deviation thereof from the recorded time curve until a suitable reference function can be selected and used to determine the axles, the method is particularly robust and delivers excellent results in the determination of the number of axles even though simple optimization algorithms are used, since it is not necessary for each of the reference functions to simulate the recorded time curve in finest detail. In addition, the method of the invention is particularly suited for decentralized computations since the use of reference functions and their parameters requires very few data to be exchanged between distributed computing entities, thus lowering bandwidth usage and keeping the foot-print of e.g. a centralized database for storing information low. Furthermore, the present invention requires significantly less computational efforts than prior art solutions based on influence line methods.

Preferably, amplitude peaks in the recorded curve are counted between the aforementioned steps of recording and repetition, and the count is used as the first number of rational functions. This reduces the number of repetitions of the minimization, since the first reference function is already based on a realistic starting value and only a few further repetitions are required in order to approximate the time curve of the sensor-measured value.

In order to further improve the precision of the method, it is advantageous for the minimization to be repeated as often as necessary until at least one of the parameters is also located within predefined limits. This ensures that cases are prevented in which an approximation of the sensor-measured value curve, which may be good *per se*, could yield an erroneous conclusion due to unfavorable superpositions in the time curve of the sensor-measured value.

Particularly preferably, each of the reference functions has the form

$$x_{ref,m}(t) = \sum_{n=1}^{N_m} f_{m,n}(t) = \sum_{n=1}^{N_m} \frac{a_{m,n}}{1+\left(\dfrac{t-t_{m,n}}{\sigma_{m,n}}\right)^2}$$

in which

$N_m$      is the number of rational functions $f_{m,n}(t)$ of the $m^{th}$ reference function $x_{ref,m}(t)$ ; and

$a_{m,n}, t_{m,n}, \sigma_{m,n}$      are the parameters of the $n^{th}$ rational function $f_{m,n}(t)$ of the $m^{th}$ reference function $x_{ref,m}(t)$.

A reference function composed of rational functions of this form simplifies the adaptation to the recorded time curve since only three parameters are varied in each rational function, wherein the three parameters are the maximum amplitude, half-value width, and the time position of the rational function.

Particularly advantageously, the aforementioned deviation measure is determined as follows:

$$\varepsilon_m = \left\| x(t) - x_{ref,m}(t, a_{m,n}, t_{m,n}, \sigma_{m,n}) \right\|$$

in which

$x(t)$      is the recorded time curve of the sensor-measured value; and

$\| \cdot \|$      is the L1 or L2 or any other norm operator.

These norms are a mathematically simple, standardized method for determining the deviation measures.

According to an advantageous embodiment of the invention, the aforementioned minimization is carried out using the gradient method. This optimization method is computationally simple and delivers robust results. Specifically when the objective is to merely determine the number of axles, an iterative minimization method can also be prematurely halted if the changes from one iteration step to the following iteration step fall below a predefined limit value, thereby saving computing effort.

Preferably, the passage of a vehicle is detected when the time curve of the sensor-measured value exceeds a predefined threshold value. Therefore, the passage of a vehicle can also be reliably detected and the method can be applied without the use of additional sensors.

According to a further advantageous embodiment of the invention, the deformation under load of the roadway is measured by at least two sensors distributed transversely across the roadway, wherein the sensor-measured value of the sensor delivering the greatest amplitude is the one that is used. As a result, the method is less sensitive with respect to which of the lanes is selected by a passing vehicle: The time curve having the more pronounced amplitude can be approximated more easily and precisely by means of reference functions.

The method according to the invention can be used not only to determine the number of axles, but also to ascertain other characteristic quantities of the vehicles. For example, an axle load of the vehicle is preferably determined on the basis of at least one parameter of a rational function of the selected reference function. Particularly preferably, the aforementioned parameter represents the maximum amplitude of this rational function. Therefore, it is possible to not only determine the load on the roadway or the bridge and detect an overload, it is also possible to measure the vehicle weight and even the distribution of the load in the vehicle and, if desired, to report this.

It is also advantageous to measure the speed of the passing vehicle and to determine an axle spacing of the vehicle on the basis of at least one parameter of each of two rational functions of the selected reference function in combination with the measured speed, in particular when the aforementioned parameter represents the time position of the maximum amplitude of the particular rational function. This makes it possible to perform an additional check or measurement of the vehicles by determining the axle spacing thereof.

According to a further advantageous embodiment of the invention, the numbers of axles, axle spacing and/or axle loads of a vehicle that are determined are compared to reference values of known vehicle types, and the vehicle type having the closest match is identified. This type of detection of the vehicle type makes it possible to perform statistical evaluations and to use the method in authorization checks for access and use, and, in some cases, even to recognize individual vehicles if these differ in terms of the aforementioned, ascertained characteristic quantities of the axles. Further, the direction of travel of a certain type of vehicle can be detected by reference to the arrangement of the ascertained axles, and the load state thereof can be detected.

Advantageously, the method according to the invention can be used in a flexible manner and in different fields. The roadway can be a road, in particular a road bridge, and the vehicle can be a road vehicle such as a truck, particularly a heavy goods vehicle. Alternatively this method can be used if the roadway is a railroad, in particular a railroad bridge, and the vehicle is a rail vehicle such as a train, especially a freight train. The roadway can be a single lane or a multilane roadway.

The WIM sensors used in the method of the invention are capable of directly or indirectly measuring the force of a vehicle on the roadway, i.e. the weight of a vehicle. Preferably the sensors detect deformation under load. The sensors may be embedded in the roadway or they may be remote. Preferred sensors are piezoelectric, induction, bending plates, fiber optic (SOFO), laser-based, strain gauge, and load cell sensors. According to a further advantageous embodiment of the invention for use on rails, the number of axles of a train can be determined upon entry into a predefined track sector and upon exit from this track sector, and the absence of a match can be reported. Therefore, it is possible to not only count axles and, optionally, to detect loads, by means of which the load distribution can also be determined, it is also possible to generate notifications indicating that track sectors are "free" or "occupied" on the basis of the difference between incoming and outgoing axles. There is no need to install additional axle sensors and evaluation devices.

The invention is explained in the following in greater detail by reference to exemplary embodiments represented in the attached drawings. In the drawings:

> Figure 1 shows a bridge comprising a sensor for measuring the load under deformation according to the invention, in a side view;
> Figure 2 shows a flowchart of the method for measuring a moving vehicle by means of the arrangement according to Figure 1;
> Figure 3 shows an example of a time curve of the measurement value of the sensor depicted in Figure 1 while the vehicle passes by;
> Figures 4a and 4b show examples of reference functions for approximating the time curve according to Figure 3;
> Figures 5a and 5b show the determination of the deviation of the reference functions according to Figure 4 on the time curve according to Figure 3; and
> Figure 6 shows a roadway comprising a plurality of sensors for measuring the load under deformation according to the invention, in a top view.

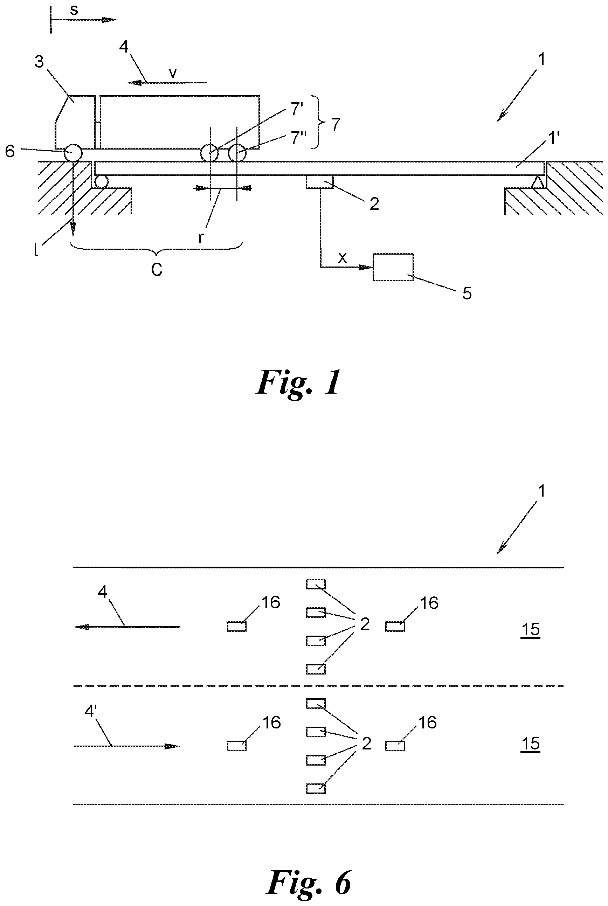

According to Figure 1, a roadway 1, which is a bridge 1' in this case, is equipped with a sensor 2. A vehicle 3 moves on the roadway 1 at a speed v in a direction of travel 4. The sensor 2 measures the deformation of the roadway 1 caused by the load of the vehicle 3 passing over this roadway. The output of the sensor 2 having the sensor-measured value x, which represents the deformation under load, is fed to an evaluation device 5. The sensor 2 can be a sensor that responds to tension or pressure and is installed in the foundation of the roadway 1 or bridge 1', e.g. it is a strain gauge, or this sensor can measure the deformation under load of the roadway 1 by determining the spacing from a fixed point, e.g. in an optical manner. Instead of the road bridge 1' shown, the roadway can also be a street, a track, or a railroad bridge for a train, or the like.

In the example shown in Figure 1, the vehicle 3 has a single front axle 6 and, in the rear region, a multiaxle group 7 comprising two rear axles 7', 7", and therefore has a number of axles C = 3. The front axle 6 has an axle load 1, which is illustrated as an example, and the two rear axles 7', 7" have an axle spacing r, which is illustrated as an example.

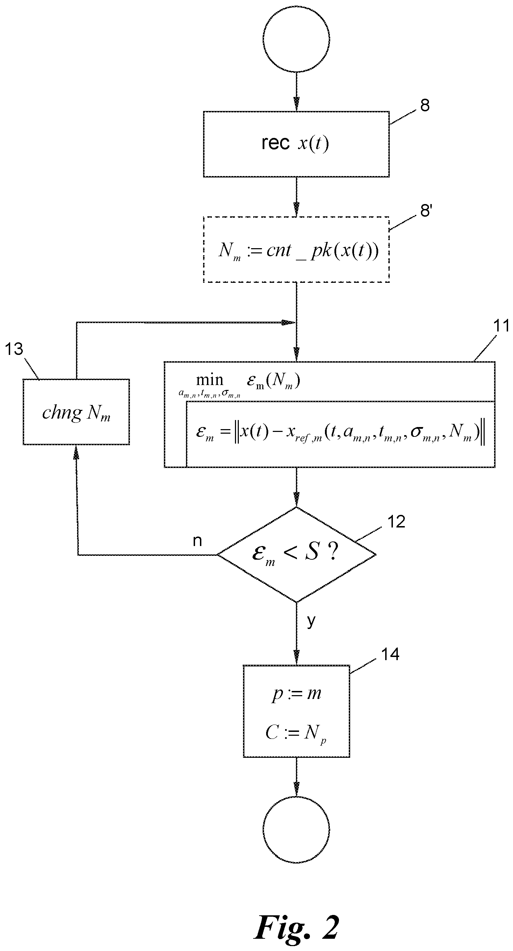

According to Figure 2, in a first step 8, the time curve x(t) of the sensor-measured value x over the time t during which the vehicle 3 passes the sensor 2 is recorded by the evaluation unit 5. The recording 8 can take place continuously, e.g. in a circular-buffer memory of the evaluation device 5, or only while the vehicle 3 passes by the sensor 2. In order to control the recording in the latter case, the sensor-measured value x can be continuously monitored, for example, wherein the passage of a vehicle 3 is detected when a predefined threshold value is exceeded. Alternatively, a separate detector can be mounted on the roadway 1, in order to detect a passing vehicle 3 and trigger the recording.

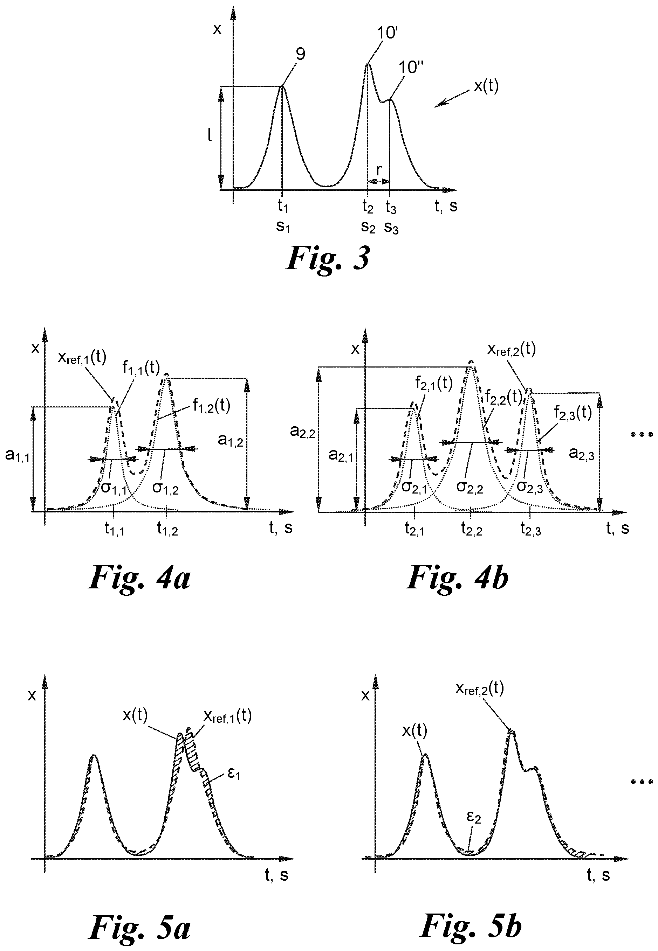

Figure 3 shows a time curve x(t) of the sensor-measured value x over time t, which, when the speed v is known, is simultaneously proportional to the displacement or the position s along the vehicle 3. The curve x(t) (or x(s)) is a reflection of the arrangement of the axles 6, 7', 7" of the vehicle 3, in that a single amplitude peak 9 of the sensor-measured value x at the entry time $t_1$ (or position $s_1$) of the front axle 6 was plotted first, and, as the curve continues, two amplitude peaks 10', 10" following one another in a short time interval were recorded at times $t_2$, $t_3$ (and positions $s_2$, $s_3$) of the rear axle 7', 7", with partially overlapping rising and falling edges.

Next, in a step 11, the recorded curve x(t) is approximated or simulated by means of one or more reference functions $x_{ref,1}(t)$, $X_{ref,2}(t)$, ... , generally $x_{ref,m}(t)$. Each reference function $x_{ref,m}(t)$ comprises a sum of $N_m$ rational functions $f_{1,n}(t)$, $f_{2,n}(t)$, ... , generally $f_{m,n}(t)$, i.e.:

$$x_{ref,m}(t) = \sum_{n=1}^{N_m} f_{m,n}(t) = \sum_{n=1}^{N_m} \frac{a_{m,n}}{1 + \left(\dfrac{t - t_{m,n}}{\sigma_{m,n}}\right)^2} \qquad (1)$$

In equation (1), $a_{m,n}$, $t_{m,n}$, $\sigma_{m,n}$ represent parameters of the $n^{th}$ rational function $f_{m,n}(t)$ in the $m^{th}$ reference function $x_{ref,m}(t)$. Each of the rational functions $f_{m,n}(t)$ can model one of the amplitude peaks 9, 10', 10" of the curve x(t); the parameter $a_{m,n}$ determines the amplitude, the parameter $t_{m,n}$ determines the time position, and the parameter $\sigma_{m,n}$ determines the half-value width of the amplitude peak modelled by the rational function $f_{m,n}(t)$. Various reference functions $x_{ref,m}(t)$ each have different numbers $N_m$ of rational functions $f_{m,n}(t)$, thereby ensuring that these can each model curves over time x(t) having different numbers of amplitude peaks.

Between the steps of recording 8 and approximation 11, the amplitude peaks 9, 10', 10" can be counted in an - optional - step 8', and the count can be used as the starting value for the number $N_m$ of rational functions $f_{m,n}(t)$, i.e. as the first number $N_1$ of the first reference function $x_{ref,1}(t)$ for the subsequent approximation 11 of the recorded curve x(t).

Figure 4a shows an example of a first reference function $x_{ref,1}(t)$ having $N_1 = 2$ rational functions $f_{1,1}(t)$ and $f_{1,2}(t)$. Figure 4b shows an example of a second reference function $x_{ref,2}(t)$ having $N_2 = 3$ rational functions $f_{2,1}(t)$, $f_{2,2}(t)$ and $f_{2,3}(t)$.

It is understood that the reference functions $x_{ref,m}(t)$ can also have further addends having optional parameters, in order, for example, to perform an offset adaptation on the curve x(t) or to simulate known effects, e.g. resulting from irregularities on the roadway 1, in the curve x(t).

In step 11, a measure $\varepsilon_m$ of the deviation of the reference function $x_{ref,m}(t)$ from the recorded curve x(t) is determined, as follows:

$$\varepsilon_m = \left\| x(t) - x_{ref,m}(t, a_{m,n}, t_{m,n}, \sigma_{m,n}) \right\| \qquad (2)$$

In equation (2), the symbol $\|\cdot\|$ represents an L1 or L2 norm operator; however, in place of an L1 or L2 norm, any other operation known by a person skilled in the art can be used to determine deviation measures between two functions (or between a sampled-value sequence and a function if the curve x(t) is discretized).

In order to approximate the time curve x(t), in step 11, the parameters $a_{m,n}$, $t_{m,n}$, $\sigma_{m,n}$ of the rational functions $f_{m,n}(t)$ are varied in the reference function $x_{ref,m}(t)$ for as long as necessary until the deviation measure $\varepsilon_m$ is minimized in each case; therefore, step 11 can also be further characterized as a minimization step or minimization 11. Any optimization method known in mathematics can be used for the minimization, e.g. the iterative gradient method, the downhill simplex method, the secant method, the Newton method, or the like. An iterative minimization process can be prematurely halted, for example, when the change in the deviation measure $\varepsilon_m$ from one iteration to the next falls below a predefined minimum value.

Since every rational function $f_{m,n}(t)$ also simulates an axle of the vehicle 3, it is also possible to limit the variation of the parameters $a_{m,n}$, $t_{m,n}$, $\sigma_{m,n}$ to realistic geometries of typical vehicle types. Therefore, for instance, the time positions $t_{m,n}$ of the amplitude peaks 9, 10', 10" are not completely arbitrary, but rather are dependent on the speed v and axle spacing r of the vehicle 3.

The result of the minimization step 11 is a reference function $x_{ref,m}(t)$ having the minimum deviation measure $\varepsilon_m$ thereof, which has been approximated to the sensor-measured value curve x(t) in the best possible manner. Figures 5a and 5b illustrate this using two different reference functions $x_{ref,1}(t)$ and $x_{ref,2}(t)$ as examples, namely with $N_1 = 2$ rational functions in Figure 5a and $N_2 = 3$ rational functions in Figure 5b, and the deviation measures $\varepsilon_1$ and $\varepsilon_2$ thereof compared to the curve x(t) shown in Figure 3. An L2 norm was used as the deviation measure $\varepsilon_m$ in this case, i.e. a surface-area difference, which is shaded in the illustration. It is clear that the deviation measure $\varepsilon_2$ of the second reference function $x_{ref,2}(t)$ shown in Figure 5b having three rational functions $f_{2,1}(t)$, $f_{2,2}(t)$, $f_{2,3}(t)$, which best approximates the curve of x(t) having three amplitude peaks 9, 10', 10", is smaller than the measure $\varepsilon_1$ in Figure 5a.

In a final decision 12, a check is performed to determine whether the deviation measure $\varepsilon_m$ of the reference function $x_{ref,m}(t)$, which was minimized in step 11, falls below a limit value S. If this is not the case, the process branches from the decision 12 to a step 13, in which the number $N_m$ of rational functions $f_{m,n}(t)$ is changed, e.g. incremented, for a further reference function $x_{ref,m+1}(t)$, whereupon the minimization step 11 is repeated using the modified reference function $x_{ref,m+1}(t)$.

Step 11 is repeatedly run through the loop 11 - 12 - 13 until a reference function $x_{ref,m}(t)$ is identified in the decision 12 that has a minimized deviation measure $\varepsilon_m$ that falls below the limit value S, i.e. that closely approximates the sensor-measured value curve x(t). In this case, the process branches to a step 14, in which the reference function

$x_{ref,m}(t)$ belonging to this deviation measure $\varepsilon_m$ is used further as the "selected" reference function $x_{ref,p}(t)$. It is now possible to select, from the selected reference function $x_{ref,p}(t)$ (in this case: $x_{ref,2}(t)$), the number $N_p$ (in this case: $N_2 = 3$) of rational functions $f_{p,n}(t)$ as the number of axles C of the vehicle 3, for example, and this is a first result of the vehicle measurement method.

In the decision 12, a check can be performed, in addition to the check of the deviation measure $\varepsilon_m$, to determine whether at least one of the parameters $a_{m,n}$, $t_{m,n}$, $\sigma_{m,n}$ is located within predefined limits, and this can be used as an additional condition for branching to step 14. It can be desirable, for example, for the parameter $\sigma_{m,n}$ determining the half-value width of a rational function $f_{m,n}(t)$ to not be too great, since it would be possible, for example, for more than just one vehicle axle to be concealed under the amplitude peak, even if a broad amplitude peak is well approximated using only one rational function $f_{m,n}(t)$.

The selected reference function $x_{ref,p}(t)$ can be used to determine not only the number of axles C, but also the axle load 1 - at least approximately - associated with each axle 6, 7', 7" by comparing the amplitude parameter $a_{p,n}$ of the particular rational function $f_{p,n}(t)$, for example, to known deformations under load of the roadway 1 provided in a table, possibly with additional interpolation or extrapolation. Further, on the basis of the individual axle loads 1 of the axles 6, 7', 7", it is possible to determine the total weight of the vehicle 3 and the load distribution thereof.

It is also possible to determine the axle spacing r of two axles 6, 7', 7" in each case by reference to the time position parameter $t_{p,n}$ of the rational functions $f_{p,n}(t)$ of the selected reference function $x_{ref,p}(t)$. To this end, the speed v of the passing vehicle 3 is measured, for example, according to the method described below in association with Figure 6 or another method known to a person skilled in the art. By reference to the ascertained speed v and the parameter $t_{p,n}$, it is then possible to determine the axle spacing r according to $r = v \cdot [t_{p,n+1} - t_{p,n}]$.

The ascertained numbers of axles C, axle spacing r, and/or axle loads 1 of a vehicle 3 can also be used to determine the vehicle type by comparing these with reference values of known vehicle types and identifying the vehicle type having the best match.

Figure 6 shows the use of a plurality of sensors 2 distributed across the roadway 1. The amplitude peaks 9, 10', 10" in the curve x(t) of the sensor-measured value x of a sensor 2 become that much more pronounced the more closely the course of the vehicle 3 passes over a sensor 2. In a sensor arrangement according to Figure 6, the sensor-measured value x of each sensor 2 used for the method according to Figures 2 - 5 is that in which the time curve x(t) has the greatest amplitude peaks 9, 10', 10". It is also possible to use measurement values x of a second sensor or even further sensors 2 for calibration in the determination of the axle load 1 or the total weight of the vehicle 3. It is also possible to provide more or fewer than four sensors 2 for each lane 15 of the roadway 1, wherein the sensors 2 can also be distributed asymmetrically across each lane 15.

Figure 6 shows additional sensors 16, which are offset with respect to the sensors 2 in the direction of travel 4, 4'. The speed v of the vehicle 3 can be determined by reference to a time offset of the curves x(t) of the measurement values x of the sensors 2, 16.

If the roadway 1 is a track, the present method can also be used to report that track sectors for trains are "free" or "occupied" by determining the number of axles C of a train upon entry into a predefined track sector and upon exit from this track sector, and, if there is no match, the track sector is reported as being occupied and, in the opposite case, the track sector is reported as being free. It is thereby also possible to detect and report the absence of one or more railcars of a train.

The invention is not limited to the embodiments presented and, instead, comprises all variants and modifications that fall within the scope of the claims, which follow. For example, the time curve x(t) of the sensor-measured value x can first be expressed in terms of the position measure s by reference to the speed v that is measured, in order to apply the entire method on the basis of the position measure s instead of time t. It is also possible to identify damage or signs of wear on the roadways and, in particular, bridges resulting from the weight load.

## Claims

1.    A method for measuring a vehicle (3) moving on a roadway (1), by means of at least one sensor (2) which measures the deformation under load of the roadway (1), comprising:

Recording the time curve (x(t)) of the sensor-measured value (x) while the vehicle (3) moves past the sensor (2);
Repeating a minimization, in which a measure ($\varepsilon_m$) for the deviation of a parametrized reference function ($x_{ref,m}(t)$) comprising a sum of a number ($N_m$) of rational functions ($f_{m,n}(t)$) from the recorded curve (x(t)) is minimized by adapting the parameters thereof ($a_{m,n}$, $t_{m,n}$, $\sigma_{m,n}$), wherein a different number ($N_m$) is used in every repetition and, in fact, as often as necessary until the deviation measure ($\varepsilon_m$) falls below a limit value (S), and then selecting the reference function ($x_{ref,m}(t)$) associated with this deviation measure ($\varepsilon_m$) as the selected reference function ($x_{ref,p}(t)$); and

Determining the number ($N_p$) of rational functions ($f_{p,n}(t)$) of the selected reference function ($x_{ref,p}(t)$) as the number of axles (C) of the vehicle (3).

2. The method according to claim 1, **characterized in that**, between the aforementioned steps of recording and repetition, amplitude peaks (9, 10', 10") in the recorded curve (x(t)) are counted, and the count is used as the first number ($N_m$) of rational functions ($f_{m,n}(t)$).

3. The method according to claim 1 or 2, **characterized in that** the minimization is repeated as often as necessary until at least one of the parameters ($a_{m,n}$, $t_{m,n}$, $\sigma_{m,n}$) is also located within predefined limits.

4. The method according to one of the claims 1 to 3, **characterized in that** each of the reference functions ($x_{ref,m}(t)$) has the form

$$x_{ref,m}(t) = \sum_{n=1}^{N_m} f_{m,n}(t) = \sum_{n=1}^{N_m} \frac{a_{m,n}}{1 + \left(\dfrac{t - t_{m,n}}{\sigma_{m,n}}\right)^2}$$

in which

$N_m$ is the number of rational functions $f_{m,n}(t)$ of the $m^{th}$ reference function $x_{ref,m}(t)$ ; and
$a_{m,n}$, $t_{m,n}$, $\sigma_{m,n}$ are the parameters of the $n^{th}$ rational function $f_{m,n}(t)$ of the $m^{th}$ reference function $x_{ref,m}(t)$.

5. The method according to claim 4, **characterized in that** the aforementioned deviation measure ($\varepsilon_m$) is determined according to

$$\varepsilon_m = \left\| x(t) - x_{ref,m}(t, a_{m,n}, t_{m,n}, \sigma_{m,n}) \right\|$$

in which

x(t) is the recorded time curve of the sensor-measured value; and
$\| \cdot \|$ is the L1 or L2 or any other norm operator.

6. The method according to one of the claims 1 to 5, **characterized in that** the aforementioned minimization is performed using the gradient method.

7. The method according to one of the claims 1 to 6, **characterized in that** the passage of a vehicle (3) is detected when the time curve (x(t)) of the sensor-measured value (x) exceeds a predefined threshold value.

8. The method according to one of the claims 1 to 7, **characterized in that** at least two sensors (2) distributed transversely across the roadway measure the deformation under load of the roadway (1), wherein the sensor-measured value (x) of the sensor (2) delivering the greatest amplitude (9, 10', 10") is the one that is used.

9. The method according to one of the claims 1 to 8, **characterized in that** an axle load (1) of the vehicle (3) is determined on the basis of at least one parameter ($a_{p,n}$) of a rational function ($f_{p,n}(t)$) of the selected reference function ($x_{ref,p}(t)$).

10. The method according to claim 9, **characterized in that** the aforementioned parameter ($a_{p,n}$) represents the maximum amplitude of this rational function ($f_{p,n}(t)$).

11. The method according to one of the claims 1 to 10, **characterized in that** the speed (v) of the passing vehicle (3) is measured and an axle spacing (r) of the vehicle (3) is determined on the basis of at least one parameter ($t_{p,n+1}$, $t_{p,n}$) of each of two rational functions ($f_{p,n}(t)$, $f_{p,n+1}(t)$) of the selected reference function ($x_{ref,p}(t)$) in combination with the measured speed (v).

**12.** The method according to claim 11, **characterized in that** the aforementioned parameter ($t_{p,n}$) represents the time position of the maximum amplitude of the particular rational function ($f_{p,n}(t)$).

**13.** The method according to one of the claims 1 to 12, **characterized in that** the ascertained numbers of axles (C), axle spacings (r), and/or axle loads (1) of a vehicle (3) are compared to reference values of known vehicle types, and the vehicle type having the best match is identified.

**14.** The method according to one of the claims 1 to 13, **characterized in that** the roadway (1) is a road, in particular a road bridge (1'), and the vehicle (3) is a truck.

**15.** The method according to one of the claims 1 to 13, **characterized in that** the roadway (1) is a track, in particular a railroad track (1'), and the vehicle (3) is a train.

**16.** The method according to claim 15, **characterized in that** the number of axles (C) of a train is determined upon entry into a predefined track sector and upon exit from this track sector, and the absence of a match is reported.


**Patentansprüche**

**1.** Verfahren zum Vermessen eines auf einer Fahrbahn (1) fahrenden Fahrzeugs (3) mithilfe zumindest eines die Belastungsverformung der Fahrbahn (1) messenden Sensors (2), umfassend:

Aufzeichnen des zeitlichen Verlaufs (x(t)) des Sensormesswerts (x) während des Vorbeifahrens des Fahrzeugs (3) am Sensor (2);
Wiederholen einer Minimierung, in der ein Maß ($\varepsilon_m$) für die Abweichung einer parametrisierten Referenzfunktion ($x_{ref,m}(t)$), welche eine Summe einer Anzahl ($N_m$) rationaler Funktionen ($f_{m,n}(t)$) umfasst, vom aufgezeichneten Verlauf (x(t)) durch Anpassen ihrer Parameter ($a_{m,n}$, $t_{m,n}$, $\sigma_{m,n}$) minimiert wird, unter Verwendung jeweils einer anderen Anzahl ($N_m$) in jeder Wiederholung, u.zw. so oft, bis das Abweichungsmaß ($\varepsilon_m$) einen Grenzwert (S) unterschreitet, und dann Auswählen der zu diesem Abweichungsmaß ($\varepsilon_m$) gehörigen Referenzfunktion ($x_{ref,m}(t)$) als ausgewählte Referenzfunktion ($x_{ref,p}(t)$); und
Ermitteln der Anzahl ($N_p$) an rationalen Funktionen ($f_{p,n}(t)$) der ausgewählten Referenzfunktion ($x_{ref,p}(t)$) als Achsanzahl (C) des Fahrzeugs (3).

**2.** Verfahren nach Anspruch 1, **dadurch gekennzeichnet, dass** zwischen den genannten Schritten des Aufzeichnens und Wiederholens Amplitudenpeaks (9, 10', 10") im aufgezeichneten Verlauf (x(t)) gezählt werden und der Zählwert als erste Anzahl ($N_m$) rationaler Funktionen ($f_{m,n}(t)$) verwendet wird.

**3.** Verfahren nach Anspruch 1 oder 2, **dadurch gekennzeichnet, dass** das Minimieren so oft wiederholt wird, bis auch zumindest einer der Parameter ($a_{m,n}$, $t_{m,n}$, $\sigma_{m,n}$) innerhalb vorgegebener Grenzen liegt.

**4.** Verfahren nach einem der Ansprüche 1 bis 3, **dadurch gekennzeichnet, dass** jede der Referenzfunktionen ($x_{ref,m}(t)$) die Form

$$x_{ref,m}(t) = \sum_{n=1}^{N_m} f_{m,n}(t) = \sum_{n=1}^{N_m} \frac{a_{m,n}}{1 + \left( \dfrac{t - t_{m,n}}{\sigma_{m,n}} \right)^2}$$

hat, mit

$N_m$ Anzahl der rationalen Funktionen $f_{m,n}(t)$ der m-ten Referenzfunktion $x_{ref,m}(t)$; und
$a_{m,n}$, $t_{m,n}$, $\sigma_{m,n}$ Parameter der n-ten rationalen Funktion $f_{m,n}(t)$ der m-ten Referenzfunktion $x_{ref,m}(t)$.

**5.** Verfahren nach Anspruch 4, **dadurch gekennzeichnet, dass** die genannten Abweichungsmaße ($\varepsilon_m$) gemäß

$$\varepsilon_m = \left\| x(t) - x_{ref,m}(t, a_{m,n}, t_{m,n}, \sigma_{m,n}) \right\|$$

bestimmt werden, mit

x(t) aufgezeichneter zeitlicher Verlauf des Sensormesswerts; und
$\| \cdot \|$ L1- oder L2- oder irgendein anderer Norm-Operator.

6. Verfahren nach einem der Ansprüche 1 bis 5, **dadurch gekennzeichnet, dass** das genannte Minimieren mittels des Gradientenverfahrens erfolgt.

7. Verfahren nach einem der Ansprüche 1 bis 6, **dadurch gekennzeichnet, dass** das Vorbeifahren eines Fahrzeugs (3) detektiert wird, wenn der zeitliche Verlauf (x(t)) des Sensormesswerts (x) einen vorgegebenen Schwellwert überschreitet.

8. Verfahren nach einem der Ansprüche 1 bis 7, **dadurch gekennzeichnet, dass** die Belastungsverformung der Fahrbahn (1) durch zumindest zwei quer über die Fahrbahn verteilte Sensoren (2) gemessen wird, wobei der Sensormesswert (x) jenes Sensors (2) verwendet wird, welcher die größte Amplitude (9, 10', 10'') liefert.

9. Verfahren nach einem der Ansprüche 1 bis 8, **dadurch gekennzeichnet, dass** aus zumindest einem Parameter ($a_{p,n}$) einer rationalen Funktion ($f_{p,n}(t)$) der ausgewählten Referenzfunktion ($x_{ref,p}(t)$) eine Achslast (1) des Fahrzeugs (3) bestimmt wird.

10. Verfahren nach Anspruch 9, **dadurch gekennzeichnet, dass** der genannte Parameter ($a_{p,n}$) die maximale Amplitude dieser rationalen Funktion ($f_{p,n}(t)$) repräsentiert.

11. Verfahren nach einem der Ansprüche 1 bis 10, **dadurch gekennzeichnet, dass** die Geschwindigkeit (v) des vorbeifahrenden Fahrzeugs (3) gemessen und aus jeweils zumindest einem Parameter ($t_{p,n+1}$, $t_{p,n}$) zweier rationaler Funktionen ($f_{p,n}(t)$, $f_{p,n+1}(t)$) der ausgewählten Referenzfunktion ($x_{ref,p}(t)$) in Verbindung mit der gemessenen Geschwindigkeit (v) ein Achsabstand (r) des Fahrzeugs (3) bestimmt wird.

12. Verfahren nach Anspruch 11, **dadurch gekennzeichnet, dass** der genannte Parameter ($t_{p,n}$) die Zeitlage der maximalen Amplitude der jeweiligen rationalen Funktion ($f_{p,n}(t)$) repräsentiert.

13. Verfahren nach einem der Ansprüche 1 bis 12, **dadurch gekennzeichnet, dass** die ermittelten Achsanzahlen (C), Achsabstände (r) und/oder Achslasten (1) eines Fahrzeugs (3) mit Referenzwerten bekannter Fahrzeugtypen verglichen und der Fahrzeugtyp mit der größten Übereinstimmung ermittelt wird.

14. Verfahren nach einem der Ansprüche 1 bis 13, **dadurch gekennzeichnet, dass** die Fahrbahn (1) eine Straße, insbesondere Straßenbrücke (1'), und das Fahrzeug (3) ein Lastkraftwagen ist.

15. Verfahren nach einem der Ansprüche 1 bis 13, **dadurch gekennzeichnet, dass** die Fahrbahn (1) ein Gleis, insbesondere Eisenbahngleis (1'), und das Fahrzeug (3) ein Zug ist.

16. Verfahren nach Anspruch 15, **dadurch gekennzeichnet, dass** beim Einfahren in einen vorgegebenen Gleissektor und beim Ausfahren aus diesem Gleissektor jeweils die Achsanzahl (C) eines Zuges ermittelt und eine mangelnde Übereinstimmung gemeldet wird.

**Revendications**

1. Procédé de mesure d'un véhicule (3) se déplaçant sur une chaussée (1), au moyen d'au moins un capteur (2) qui mesure la déformation sous la charge de la chaussée (1), comprenant :

l'enregistrement de la courbe en fonction du temps (x(t)) de la valeur (x) mesurée par le capteur pendant que le véhicule (3) passe au niveau du capteur (2) ;
la répétition d'une minimisation, dans laquelle une mesure ($\varepsilon_m$) pour la déviation d'une fonction de référence paramétrée ($x_{ref,m}(t)$) comprenant une somme d'un nombre ($N_m$) de fonctions rationnelles ($f_{m,n}(t)$) de la courbe ($x(t)$) enregistrée est minimisée en adaptant ses paramètres ($a_{m,n}$, $t_{m,n}$, $\sigma_{m,n}$) , où un nombre ($N_m$) différent est utilisé dans chaque répétition et, en fait, aussi souvent que nécessaire jusqu'à ce que la mesure de déviation ($\varepsilon_m$) tombe en dessous d'une valeur limite (S), et ensuite la sélection de la fonction de référence ($x_{ref,m}(t)$) associée avec cette mesure de déviation ($\varepsilon_m$) en tant que fonction de référence ($x_{ref,p}(t)$) sélectionnée ; et la détermination du nombre ($N_p$) de fonctions rationnelles ($f_{p,n}(t)$) de la fonction de référence ($x_{ref,p}(t)$) sélectionnée comme étant le nombre d'essieux (C) du véhicule (3).

2. Procédé selon la revendication 1, **caractérisé en ce qu'**entre les étapes citées précédemment d'enregistrement et de répétition, des pics d'amplitude (9, 10', 10") dans la courbe ($x(t)$) enregistrée sont comptés, et le compte est utilisé en tant que premier nombre ($N_m$) de fonctions rationnelles ($f_{m,n}(t)$).

3. Procédé selon la revendication 1 ou 2, **caractérisé en ce que** la minimisation est répétée aussi souvent que nécessaire jusqu'à ce qu'au moins l'un des paramètres ($a_{m,n}$, $t_{m,n}$, $\sigma_{m,n}$) est également situé dans des limites prédéfinies.

4. Procédé selon l'une des revendications 1 à 3, **caractérisé en ce que** chacune des fonctions de référence ($x_{ref,m}(t)$) est de la forme

$$x_{ref,m}(t) = \sum_{n=1}^{N_m} f_{m,n}(t) = \sum_{n=1}^{N_m} \frac{a_{m,n}}{1 + \left(\dfrac{t - t_{m,n}}{\sigma_{m,n}}\right)^2}$$

dans laquelle

$N_m$ est le nombre de fonctions rationnelles $f_{m,n}(t)$ de la $m^{\text{ième}}$ fonction de référence $x_{ref,m}(t)$ ; et
$a_{m,n}$, $t_{m,n}$, $\sigma_{m,n}$ sont les paramètres de la $n^{\text{ième}}$ fonction rationnelle $f_{m,n}(t)$ de la $m^{\text{ième}}$ fonction de référence $x_{ref,m}(t)$.

5. Procédé selon la revendication 4, **caractérisée en ce que** la mesure de la déviation ($\varepsilon_m$) citée précédemment est déterminée selon la relation

$$\varepsilon_m = \left\| x(t) - x_{ref,m}(t, a_{m,n}, t_{m,n}, \sigma_{m,n}) \right\|$$

dans laquelle

$x(t)$ est la courbe de temps enregistrée de la valeur mesurée par le capteur ; et
$\| \cdot \|$ est le L1 ou le L2 ou un autre opérateur normatif quelconque.

6. Procédé selon l'une des revendications 1 à 5, **caractérisé en ce que** la minimisation citée précédemment est réalisée en utilisant la méthode du gradient.

7. Procédé selon l'une des revendications 1 à 6, **caractérisé en ce que** le passage d'un véhicule (3) est détecté lorsque la courbe de temps ($x(t)$) de la valeur mesurée par le capteur (x) dépasse une valeur de seuil prédéfinie.

8. Procédé selon l'une des revendications 1 à 7, **caractérisé en ce qu'**au moins deux capteurs (2) disposés de manière transverse sur la chaussée mesurent la déformation sous la charge de la chaussée (1), où la valeur mesurée par le capteur (x) du capteur (2) indiquant la plus grande amplitude (9, 10', 10") est celle qui est utilisée.

9. Procédé selon l'une des revendications 1 à 8, **caractérisé en ce que** la charge par essieu (1) du véhicule (3) est déterminée sur la base d'au moins un paramètre ($a_{p,n}$) d'une fonction rationnelle ($f_{p,n}(t)$) de la fonction de référence ($x_{ref,p}(t)$) sélectionnée.

10. Procédé selon la revendication 9, **caractérisé en ce que** la paramètre ($a_{p,n}$) cité précédemment représente l'amplitude maximale de cette fonction rationnelle ($f_{p,n}(t)$).

**11.** Procédé selon l'une des revendications 1 à 10, caractérisé en ce la vitesse (v) du véhicule (3) passant est mesurée et un espacement d'essieux (r) du véhicule (3) est déterminé sur la base d'au moins un paramètre ($t_{p,n+1}$, $t_{p,n}$) de chacune de deux fonctions rationnelles ($f_{p,n}(t)$), $f_{p,n+1}(t)$) de la fonction de référence ($x_{ref,p}(t)$) sélectionnée en combinaison avec la vitesse mesurée (v).

**12.** Procédé selon la revendication 11, **caractérisé en ce que** le paramètre ($t_{p,n}$) cité précédemment représente la position du temps pour l'amplitude maximale de la fonction rationnelle ($f_{p,n}(t)$) particulière.

**13.** Procédé selon l'une des revendications 1 à 12, **caractérisé en ce que** les nombres déterminés d'essieux (C), d'espacement d'essieux (r), et/ou de charges par essieu (1) d'un véhicule (3) sont comparés à des valeurs de référence de types de véhicules connus, et le type de véhicule ayant la meilleure concordance est identifié.

**14.** Procédé selon l'une des revendications 1 à 13, **caractérisé en ce que** la chaussée (1) est une route, en particulier un pont routier (1'), et le véhicule (3) est un camion.

**15.** Procédé selon l'une des revendications 1 à 13, **caractérisé en ce que** la chaussée (1) est une voie, en particulier une voie de chemin de fer (1'), et le véhicule (3) est un train.

**16.** Procédé selon la revendication 15, **caractérisé en ce que** le nombre d'essieux (C) d'un train est déterminé lors d'une entrée dans un secteur de voie prédéfini et lors de la sortie de ce secteur de voie, et l'absence d'une concordance est rapportée.

**Fig. 1**

**Fig. 6**

$$\text{rec } x(t) \quad 8$$

$$N_m := cnt\_pk(x(t)) \quad 8'$$

$$chng\ N_m \quad 13$$

$$\min_{a_{m,n}, t_{m,n}, \sigma_{m,n}} \varepsilon_{\mathrm{m}}(N_m) \quad 11$$

$$\varepsilon_m = \left\| x(t) - x_{ref,m}(t, a_{m,n}, t_{m,n}, \sigma_{m,n}, N_m) \right\|$$

$$\varepsilon_m < S\ ? \quad 12$$

n

y

$$p := m$$
$$C := N_p \quad 14$$

**Fig. 2**

**Fig. 3**

**Fig. 4a**

**Fig. 4b**

**Fig. 5a**

**Fig. 5b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5111897 A
- WO 2012139145 A1
- US 2012160574 A1

**Non-patent literature cited in the description**

- **MOSES, F.** Weigh-in-Motion System Using Instrumented Bridges. *ASCE, Transportation Engineering Journal,* 1979, vol. 105 (3), 233-249
- **ŽNIDARIČ et al.** Weigh-in-Motion of Axles and Vehicles for Europe (WAVE). *Report of Work Package 1.2, Bridge WIM Systems, 4th Framework Program Transport, RTD-Project RO-96-SC 403, Dublin,* 2001